# EUROPEAN PATENT APPLICATION

(11) **EP 4 610 228 A1**
(43) Date of publication of application: **03.09.2025**
(21) Application number: 23881034.5
(22) Date of filing: 28.02.2023
(51) Int. Cl.: C01F 7/02, C01F 7/30, B01J 21/04, B01J 32/00, B01J 35/60, C10G 45/00

(54) **POROUS ALUMINA MATERIAL, PREPARATION THEREFOR AND USE THEREOF**

(30) Priority: 27.10.2022 CN 202211322494
(71) Applicant: China Petroleum & Chemical Corporation, Beijing 100728 (CN); Sinopec Dalian Research Institute of Petroleum and Petrochemicals Co., Ltd., Lushunkou District Dalian, Liaoning 116045 (CN)
(72) Inventor: WANG, Gang, Dalian, Liaoning 116045 (CN); SUI, Baokuan, Dalian, Liaoning 116045 (CN); YANG, Weiya, Dalian, Liaoning 116045 (CN); WANG, Shaojun, Dalian, Liaoning 116045 (CN); ZHANG, Huicheng, Dalian, Liaoning 116045 (CN)
(74) Representative: karo IP
(86) International application number: PCT/CN2023/078705
(87) International publication number: WO 2024/087431

(57) **Abstract**

Disclosed are an alumina porous material and its preparation and application. The porous material has substantially orderly distributed spherical or quasi-spherical cavities inside, the cavities have an average diameter of 100-500 nm, and at least a part of adjacent cavities are connected through mesopores. The alumina porous material is suitable for being used as a support for preparing a heavy residue hydroprocessing catalyst, or as a support for catalysts used in other macromolecular catalytic processes.

## Description

### Technical Field

The present application belongs to the field of inorganic materials, and specifically relates to an alumina porous material and its preparation and application.

### Background Art

Macroporous alumina materials are widely used in the fields of catalyst supports, adsorption separation, chromatography, acoustic resistance and thermal resistance materials due to their relatively large pore, relatively high specific surface area and good thermal stability. There are currently many types of preparation methods for macroporous alumina materials.

In US Patent Nos. US 4102822 and US 4448896, substances such as starch was used as a pore expander to fill the alumina precursor. After the pore expander is gasified, a macroporous alumina with an ink bottle shape is obtained, which has a small pore opening, a disordered pore distribution, and a weak mass transfer effect on macromolecules.

In China Patent No. CN101890372B, a macroporous alumina was prepared using molten salt solubilization method. The resulting material has a large pore diameter and good pore penetration. However, the preparation scheme uses aluminum nitrate salt and a large amount of oil phase. The preparation process involves a high temperature and high pressure reaction environment, which is prone to explosion. The pores of the resulting macroporous alumina are irregular.

In Article Chem. Mater. (2004, 16: 4245-4256), a porous polymer foam template was prepared by emulsion polymerization, and then Al₂O₃ precursors were filled respectively into the polymer template. After conversion, the template was removed to obtain a macroporous oxide material. The preparation principle of this type of method is simple. The macroporous alumina obtained has micron-sized interconnected macropores. The pore diameter of the macropores can reach 1-50 µm, and the shape of the pore is irregular. However, the preparation of the template used requires the use of organic monomers, surfactants, stabilizers, etc. The preparation process is cumbersome and the preparation cost is high. The template cannot be reused, and the decomposition of organics when burning the template will also cause greater environmental pollution.

Dezhi Han et al., in "Hierarchically ordered meso/macroporous c-alumina for enhanced Hydrodesulfurization performance", Microporous and Mesoporous Materials 158 (2012) 1-6, the colloidal crystals formed by polymethyl methacrylate (PMMA) microspheres were used as templates, and then alumina precursors were filled into the templates, and three-dimensional ordered macroporous alumina was obtained after post-treatment. The polymer microsphere template used in this method generally needs to be removed by calcination, the template is non-renewable, and will cause environmental pollution. The obtained material has extremely low crushing strength and is easily pulverized, so it is not suitable for fixed bed reactors.

Studies have shown that for specific application areas, such as heavy oil and residue hydrodemetallization catalysts, excessively large pore diameters have little significance for improving catalyst performance. Generally, the macropore diameter is required to be 100-300 nm and the mesopore diameter is 10-30 nm. At this time, it has better catalytic performance as a catalyst support. Therefore, it is also important to reasonably control the pore diameter of macroporous materials.

### Summary of the invention

In view of the deficiencies in the prior art, the present application provides an alumina porous material and its preparation and application. The alumina porous material has a rich mesoporous structure and internal spherical cavities, is suitable as a support for heavy residue hydroprocessing catalysts, and for which the preparation process is simple, green and environmentally friendly, and easy for industrial production.

In order to achieve the above objectives, in an aspect, the present application provides an alumina porous material comprising substantially orderly distributed spherical or quasi-spherical cavities inside, the cavities have an average diameter of 100-500 nm, and at least a part of adjacent cavities are connected through mesopores.

Preferably, the cavities are distributed inside the porous material substantially in a form selected from face-centered cubic, body-centered cubic, close-packed hexagonal or a combination thereof.

In another aspect, the present application provides a sol-gel method for preparing an alumina porous material, comprising the following steps:
1) mixing an aluminum source, a cavity forming agent, a polyol, an amide, a polyhydroxy polymer, a solvent and optional an additive, then adding a coagulant, and mixing to obtain a gel;
2) subjecting the gel obtained in step 1) to an aging treatment to obtain an aged material;
3) eluting the aged material obtained in step 2) with an eluting agent to obtain an eluate and a solid phase material; and
4) drying and optionally calcining the solid phase material obtained in step 3) to obtain the porous material,
wherein the cavity forming agent is selected from soluble sugar, soluble alkali metal salt or a combination thereof; and

The cavity forming agent is used in an amount of 10-60 g relative to the amount of 100 g of solvent.

In still another aspect, a method of using the alumina porous material of the present application as a catalyst support is provided, comprising the step of loading a catalytically active component on the porous material.

In yet another aspect, the present application provides a heavy oil hydrogenation catalyst, comprising 40-90% of a support and 10-50% of a hydrogenation catalytically active component, based on the dry weight of the catalyst, wherein the support is the alumina porous material according to the present application.

The alumina porous material of the present application is suitable for use as a support for preparing heavy residue hydroprocessing catalysts, or as a support for catalysts used in other macromolecular catalytic processes, and has good application effects when used as a support for residue hydrodemetallization catalysts.

Other features and advantages of the present invention will be illustrated in detail in the following detailed description.

### BRIEF DESCRIPTION OF THE DRAWINGS

The accompanying drawings are used to provide further understanding of the present application and constitute a part of the specification. Together with the following specific embodiments, they are used to explain the present application, but do not constitute a limitation to the present application. In the accompanying drawings:
FIG. 1 shows a scanning electron microscope (SEM) image of the alumina porous material prepared in Example 1 of the present application;
FIG. 2 shows a SEM image of the cavity wall grains of the internal cavity of the alumina porous material prepared in Example 1 of the present application;
FIG. 3 shows the mesopore distribution profile of the alumina porous material prepared in Example 1 of the present application;
FIG. 4 shows a SEM image of the alumina porous material prepared in Example 2 of the present application;
FIG. 5 shows a SEM image of the alumina porous material prepared in Example 3 of the present application;
FIG. 6 shows a SEM image of the alumina porous material prepared in Comparative Example 1 of the present application;
FIG. 7 shows a SEM image of the alumina porous material prepared in Comparative Example 2 of the present application;
FIG. 8 shows a SEM image of the alumina porous material prepared in Comparative Example 3 of the present application; and
FIG. 9 is a schematic diagram showing a specific form of the distribution of face-centered cubic, body-centered cubic and close-packed hexagonal as defined in the present application.

### DETAILED DESCRIPTION

The specific embodiments of the present application are described in detail below with reference to the accompanying drawings. It should be understood that the specific embodiments described herein are only used to illustrate and explain the present application, and are not used to limit the present application.

Any specific numerical value disclosed herein (including the endpoints of a numerical range) is not limited to the exact value of that numerical value, but should be understood to also encompass values close to that exact value, for example, all possible numerical values within ±5% of that exact value. Furthermore, for the disclosed numerical range, the endpoint values of the range, the endpoint values and the specific point values within the range, and the various specific point values can be arbitrarily combined to obtain one or more new numerical ranges, and these new numerical ranges should also be regarded to be specifically disclosed herein.

Unless otherwise stated, the terms used herein have the same meaning as commonly understood by those skilled in the art. If a term is defined herein and its definition is different from the commonly understood meaning in the art, the definition herein shall prevail.

In the present application, the term "substantially ordered distribution" is relative to random distribution, indicating that the spherical or quasi-spherical cavities are arranged generally according to a certain pattern or rule inside the alumina porous material of the present application, for example, generally distributed in the form of face-centered cubic, body-centered cubic, close-packed hexagonal or a combination thereof.

In the present application, the term "substantially" means that an error within a generally acceptable range in the art is allowed to exist, for example, an error range within ± 20%, particularly within ± 10%, and more particularly within ± 5%.

In the present application, the terms "spherical or quasi-spherical cavities" and "spherical cavity-like macropores" can be used interchangeably, and both refer to spherical or quasi-spherical cavities distributed inside the alumina porous material of the present application.

In the present application, the term "mesopore" has the meaning as generally understood in the art, and particularly refers to pores with a pore diameter in the range of 2-50 nm.

In the present application, the term "micropore" has the meaning as generally understood in the art, and particularly refers to a pore with a pore diameter below 2 nm.

In the present application, the term "quasi-spherical" has the meaning as generally understood in the art, and particularly refers to having substantial spheroid morphological characteristics. However, when measuring the "diameter" of the "quasi-spheroid", 1/2 of the sum of the maximum diameter and the minimum diameter obtained is defined as d₀, and any other measured "quasi-spheroid" diameter is defined as d. When the value of (d-d₀)/d₀ *100% is within ± 20%, particularly within ± 10%, and more particularly within ± 5%, it is called "quasi-spherical". If the value of (d-d₀)/d₀ *100% is 0%, then it is a perfect spheroid.

In the present application, the term "soluble" has the meaning as generally understood in the art, and specifically refers to having a solubility more than or equal to 10 g, preferably more than or equal to 20 g, in 100 g of the solvent used at 20 °C and 1 atmosphere.

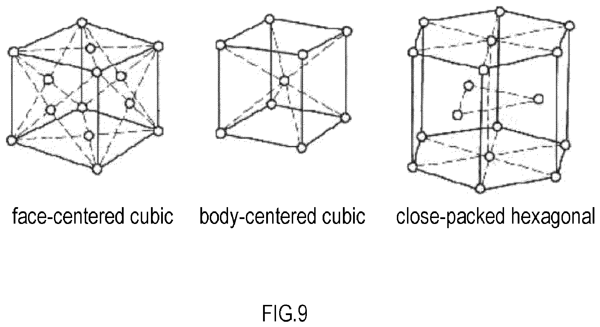

In the present application, the terms "face-centered cubic", "body-centered cubic" and "close-packed hexagonal" have the meanings as generally understood in the art. As a specific example, a schematic diagram of a specific form thereof can be shown in FIG. 9.

In the present application, the average diameter of the internal cavities, the thickness of the cavity walls and the grain size of the cavity walls of the obtained porous material are measured through SEM images of the obtained porous material. Although only the surface morphology of the material sample can be seen on the SEM image, since the sample surface is a random cross-section, which is equivalent to the cross-section formed by cutting the sample in any direction, its surface morphology can reflect the internal structural characteristics of the material sample, and then the corresponding data of the internal cavity of the material can be obtained by measuring the data of the relevant structure displayed on its SEM image. Specifically, in the SEM image, 50 internal cavity cross-sections are randomly selected, their diameters are measured and the average value is calculated as the average diameter of the cavity; the thicknesses between 50 groups of adjacent cavity cross-sections at the thinnest part of the cavity wall are randomly measured, and the average value is taken as the cavity wall thickness of the cavity; and the diameters of 50 grains on the cavity wall are randomly measured, and the average value is taken as the average diameter of the grains.

In the present application, except for the contents explicitly described, any matters or items not mentioned are directly applicable to those known in the art without any changes. Moreover, any embodiment described herein may be freely combined with one or more other embodiments described herein, and the technical solutions or technical ideas formed thereby are regarded as a part of the original disclosure or original record of the present invention, and should not be regarded as new content that has not been disclosed or anticipated herein, unless those skilled in the art consider that the combination is obviously unreasonable.

All patent and non-patent literature, including but not limited to textbooks and journal articles etc., mentioned herein are incorporated herein by reference in their entirety.

As described above, in a first aspect, the present application provides an alumina porous material comprising substantially orderly distributed spherical or quasi-spherical cavities inside, the cavities have an average diameter of 100-500 nm, preferably 150-350 nm, and at least a part of the adjacent cavities are connected through mesopores.

According to the present application, the alumina porous material may be in various shapes, such as spherical, rod-shaped, sheet-shaped or other particle forms of any shape, and the present application has no strict limitation on this. Preferably, the alumina porous material is in the form of particles, and the size of the particles is at least 1.0 µm, for example, can be 1.0-5000 µm.

According to the present application, a plurality of (for example, at least 10, such as 10-10000/µm³) spherical or quasi-spherical cavities are distributed in a substantially orderly manner inside the alumina porous material. Preferably, the cavities are distributed substantially in a form selected from face-centered cubic, body-centered cubic, close-packed hexagonal, or a combination thereof. In certain preferred embodiments, the spherical or quasi-spherical cavities are distributed inside the porous material of the present application in an ordered form, preferably in the form of face -centered cubic, body-centered cubic, close-packed hexagonal, or a combination thereof.

According to the present application, at least a part of the adjacent cavities inside the alumina porous material are connected through mesopores, and after calcination, substantially all adjacent cavities are connected through mesopores, wherein "connected through mesopores" means that the pore diameter of the largest connecting pore between adjacent cavities is in the range of 2-50 nm, but does not exclude the existence of micropores with a pore diameter below 2 nm.

In a preferred embodiment, the pore diameter corresponding to the peak value of the mesopore distribution peak on the pore distribution profile of the porous material is in the range of 10-30 nm, as measured by the BET nitrogen adsorption method and calculated by BJH method.

In a preferred embodiment, the half-height width of the pore distribution peak on the mesopore distribution profile of the porous material is no more than 15 nm, preferably 1-10 nm, more preferably 1-6 nm, for example 1-5 nm or 1-3 nm, as measured by BET nitrogen adsorption method and calculated by BJH method.

In a preferred embodiment, the average thickness of the cavity walls between adjacent cavities inside the porous material is 5-100 nm, preferably 10-80 nm, more preferably 10-35 nm.

In certain preferred embodiments, the cavity wall of the cavity is composed of alumina grains with an average diameter of 5-30 nm.

In some other preferred embodiments, for example, without high-temperature calcination treatment, the cavity wall of the cavity is composed of alumina precursor grains containing water or hydroxyl groups and organics.

In a preferred embodiment, the porous material has one or more of the following characteristics:
a crushing strength of 8-20 N/mm, preferably 10-18 N/mm;
a specific surface area of 200-350 m²/g, preferably 210-320 m²/g, as measured by the BET method;
a pore volume of 0.5-1.5 m³/g, preferably 0.7-1.0 m³/g, as measured by the BET method;
a porosity of 0.50-0.95, preferably 0.6-0.9, as measured by mercury intrusion method; and
a bulk density of 0.1-1.0 g/cm³, preferably 0.2-0.5 g/cm³.

In a second aspect, the present application provides a sol-gel method for preparing an alumina porous material, comprising the following steps:
1) mixing an aluminum source, a cavity forming agent, a polyol, an amide, a polyhydroxy polymer, a solvent and optional an additive, then adding a coagulant, and mixing to obtain a gel;
2) subjecting the gel obtained in step 1) to an aging treatment to obtain an aged material;
3) eluting the aged material obtained in step 2) with an eluting agent to obtain an eluate and a solid phase material; and
4) drying and optionally calcining the solid phase material obtained in step 3) to obtain the porous material,
wherein the cavity forming agent is selected from soluble sugar, soluble alkali metal salt or a combination thereof; and the cavity forming agent is used in an amount of 10-60 g, preferably 20-60 g, and more preferably 30-60 g relative to the amount of 100 g of solvent.

In the sol-gel method of the present application, the material mixture undergoes a slow sol-gel reaction through a coagulant, and the polyhydroxy polymer induces the gel to undergo solid-liquid phase separation; since a large amount of soluble cavity-forming agent is used in the material mixture, when the formed gel undergoes phase separation, the cavity-forming agent will migrate into the liquid phase formed by the phase separation, and due to the spontaneous stability of the system, it will eventually aggregate into spherical or quasi-spherical agglomerates, which can support the solid phase obtained by phase separation. The added polyol can make the gel network more uniform, provide solid-liquid separation sites, reduce the size of the solid-liquid separation space, and thus reduce the size of the formed cavity, at the same time coordinated with amide, can further promote the formation of small-sized cavities and make their distribution more uniform. After the gel is stabilized, the soluble materials can be removed by washing the gel with an eluting agent, and the space occupied by the soluble materials forms a spherical or quasi-spherical cavity. The soluble cavity-forming agent used in the present application is non-toxic, cheap, readily available, and can be reused, which is beneficial to reduce the preparation cost.

In a preferred embodiment, the soluble sugar serving as the cavity forming agent is selected from sucrose, glucose, fructose, maltose or a combination thereof, and the soluble alkali metal salt is selected from nitrates, sulfates or chlorides of alkali metals, more preferably, the alkali metal is selected from potassium, sodium or a combination thereof.

In a preferred embodiment, the solvent is selected from low-carbon alcohol, water, or a combination thereof. According to the present application, the low-carbon alcohol refers to a monohydric alcohol of C₅ or below, preferably selected from methanol, ethanol, n-propanol, isopropanol or a combination thereof, further preferably selected from ethanol, propanol or a combination thereof. According to the present application, when a mixture of low-carbon alcohol and water is used as the solvent, the two can be mixed in any proportion.

In a preferred embodiment, the coagulant is selected from substituted or unsubstituted pyridine, alkylene oxide or a combination thereof. Preferably, the substituted pyridine is selected from alkyl pyridine, pyridine chloride or a combination thereof, and the alkyl pyridine is further preferably selected from monomethyl pyridine, dimethyl pyridine, trimethyl pyridine or a combination thereof; the pyridine chloride is further preferably selected from monochloropyridine, dichloropyridine, trichloropyridine or a combination thereof. Preferably, the alkylene oxide is selected from ethylene oxide, propylene oxide, butylene oxide or a combination thereof.

In a preferred embodiment, the eluting agent is selected from low-carbon alcohol, water, or a combination thereof, wherein the low-carbon alcohol is a monohydric alcohol of C₅ or below, preferably selected from methanol, ethanol, n-propanol, isopropanol, or a combination thereof, further preferably selected from ethanol, propanol, or a combination thereof. According to the present application, when a mixture of low-carbon alcohol and water is used as the eluting agent, the weight concentration of the low-carbon alcohol is 40% or above.

In the method of the present application, the aluminum source may be any aluminum source commonly used in the art and suitable for preparing porous alumina materials by a sol-gel method, and the present application has no strict limitation on this. In a preferred embodiment, the aluminum source is selected from aluminum chloride, aluminum nitrate, aluminum sulfate or a combination thereof.

In a preferred embodiment, the polyhydroxy polymer is selected from polyethylene glycol, polyvinyl alcohol or a combination thereof, and has a viscosity average molecular weight of 50,000 to 200,000.

In a preferred embodiment, the polyol is selected from ethylene glycol, propylene glycol, butylene glycol, glycerol, isopropanol, pentaerythritol, or a mixture thereof in any proportion, preferably selected from propylene glycol and glycerol.

In a preferred embodiment, the amide is selected from formamide, acetamide, dimethylformamide, diethylformamide, or a combination thereof.

In a preferred embodiment, the step 1) is performed at a temperature of 10-60 °C.

In a preferred embodiment, based on the weight of the gel obtained in step 1), the gel comprises 10-35 wt%, preferably 15-30 wt% of an aluminum source, 10-40 wt%, preferably 15-30 wt% of a cavity forming agent, 0.1-2.5 wt%, preferably 0.5-1.5 wt% of a polyol, 0.1-2.5 wt%, preferably 0.2-2.0 wt% of an amide, 0.1-2.5 wt%, preferably 0.2-2.0 wt% of a polyhydroxy polymer, 20-70 wt%, preferably 25-60 wt% of a solvent, 15-35 wt%, preferably 20-30 wt% of a coagulant, and 0-20 wt%, preferably 0-15 wt% of an additive.

According to the present application, in step 1), an additive containing Ce, Zr, Ti, Zr, Si, La and/or P elements may be added to modify the obtained material, and the additive is preferably selected from water-soluble or water-dispersible precursors of Ce, Zr, Ti, La, silicon and phosphorus. In certain preferred embodiments, the additive is selected from soluble salts of Ce, Zr, Ti and La, preferably selected from nitrates, sulfates and chlorides of these metals. In other preferred embodiments, the additive is selected from alkoxides, silicate ester and phosphoric acid of Zr and Ti.

In a preferred embodiment, the aging treatment conditions in step 2) include: aging temperature of 10-60 °C, preferably 20-40 °C; aging time of 1-72 hours, preferably 12-60 hours.

In a preferred embodiment, the elution in step 3) is performed as follows: the aged material is immersed in an eluent at 10-100 °C for a period of time, generally 1-72 hours, preferably 24-48 hours, and then solid-liquid separation is performed. Preferably, the solid-liquid separation is performed by a method selected from filtration, centrifugal separation, gravity sedimentation, or a combination thereof. The obtained solid phase material is dried and calcined in step 4) to obtain the target porous material. The liquid phase material is treated by low temperature or evaporation, and the cavity forming agent can be crystallized and precipitated to achieve repeated use.

In the method of the present application, the drying in step 4) can be ordinary hot air drying or vacuum drying. In a preferred embodiment, the drying temperature is 10-150 °C, preferably 30-60 °C, and the drying is performed until no obvious liquid is present, preferably for 0.5-48 hours.

According to the present application, the porous material obtained in step 4) may be optionally calcined. If it is not calcined, residual cavity-forming agent may still exist in some pores of the obtained porous material (for example, pores connecting some adjacent cavities), and the porous material may also contain moisture or hydroxyl groups rich in the alumina precursor grains that are easily removed at high temperatures, which reduces the pore volume and porosity of the obtained porous material. After calcination, the residual substances mentioned above are substantially removed, so that the pore volume and porosity of the obtained porous material are improved. In a preferred embodiment, the calcination conditions in step 4) include: temperature of 300-950 °C, preferably 400-850 °C, more preferably 550-750 °C, and calcination time of 0.5-48 hours, preferably 1-24 hours, more preferably 1-6 hours.

In a third aspect, an alumina porous material prepared by the method of the present application is provided.

In a fourth aspect, use of the alumina porous material according to the present application as a catalyst support, in particular a heavy oil hydrogenation catalyst support, is provided.

In a fifth aspect, a method of using the alumina porous material according to the present application as a catalyst support is provided, comprising the step of loading a catalytically active component on the porous material.

In a preferred embodiment, the catalyst is a heavy oil hydrogenation catalyst, and the catalytically active component is a hydrogenation catalytically active component, preferably selected from Co, Mo, Ni, W or a combination thereof.

In a sixth aspect, a heavy oil hydrogenation catalyst is provided, comprising, based on the dry weight of the catalyst, 40-90% of a support and 10-50% of a hydrogenation catalytically active component, wherein the support is the alumina porous material according to the present application.

In a preferred embodiment, the hydrogenation catalytically active component is selected from Co, Mo, Ni, W or a combination thereof.

In certain preferred embodiments, the present application provides the following technical solutions:
1. A spherical cavity-like macroporous alumina material, characterized in that: the spherical cavity-like macropores are uniformly distributed in a honeycomb shape inside the alumina material, the macropore diameter is in the range of 100-450 nm, the spherical cavity-like macropores are connected through mesopores, the pore diameter of the mesopores is in the range of 10-30 nm; the mesopore pore diameter distribution is concentrated, and the half-height width of the pore distribution peak is no more than 3 nm.
2. The spherical cavity-like macroporous alumina according to item 1, characterized in that the pore wall thickness of the spherical cavity-like macropores is 5-50 nm, preferably 10-35 nm.
3. The spherical cavity-like macroporous alumina according to item 1, characterized in that the pore walls of the spherical cavity-like macropores are composed of small alumina grains of 5-30 nm.
4. The spherical cavity-like macroporous alumina according to item 1, characterized in that the crushing strength is 8-20 N/mm, preferably 10-15 N/mm.
5. The spherical cavity-like macroporous alumina according to item 1, characterized in that: the specific surface area is 250-350 m²/g, the pore volume is 0.5-1.5 m³/g, and the macropore porosity is 0.50-0.95.
6. A method for preparing spherical cavity-like macroporous alumina, characterized in that including the following contents: mixing an aluminum source, soluble sugar, polyol, amide, polyethylene glycol and a solvent uniformly, then adding a coagulant, and mixing uniformly to obtain a gel; aging the gel, eluting the aged material, and drying and calcining the solid phase to obtain a spherical cavity-like macroporous alumina; wherein the solvent is a low-carbon alcohol and/or water; and the coagulant is pyridine and/or ethylene oxide.
7. The method according to item 6, characterized in that the aluminum source is one or more of aluminum chloride, aluminum nitrate and aluminum sulfate.
8. The method according to item 6, characterized in that the low-carbon alcohol is an alcohol of C₅ or below, preferably one or more of methanol, ethanol, n-propanol and isopropanol.
9. The method according to item 6, characterized in that the soluble sugar is one or more of sucrose, glucose and fructose.
10. The method according to item 6, characterized in that the viscosity average molecular weight of the polyethylene glycol is 50,000 to 200,000.
11. The method according to item 6, characterized in that the polyol is one or more of ethylene glycol, propylene glycol, butylene glycol, glycerol, isopropanol and pentaerythritol.
12. The method according to item 6, characterized in that the amide is one or more of formamide, acetamide, dimethylformamide and diethylformamide.
13. The method according to item 6, characterized in that: based on the weight of the gel, the aluminum source is 10%-35%, the soluble sugar is 10%-40%, the polyol is 0.1%-2.5%, the amide is 0.1%-2.5%, the polyethylene glycol is 0.1%-2.5%, the solvent is 20%-70%, and the coagulant is 15%-35%.
14. The method according to item 6, characterized in that: the aging treatment conditions comprising: aging temperature of 10-40 °C, preferably 20-30 °C, aging time 1 hour-72 hours, preferably 12 hours-60 hours.
15. The method according to item 6, characterized in that: the elution process comprising: immersing the aged material in an eluent for 1 hour-72 hours, and then performing solid-liquid separation; wherein the eluent is a low-carbon alcohol and/or water, and the low-carbon alcohol is one or more of monohydric alcohols of C₅ or below.
16. A support for a heavy residue hydroprocessing catalyst, characterized in that the support comprises the spherical cavity-like macroporous alumina in any one of items 1-5 or the spherical cavity-like macroporous alumina prepared by any method of items 6-15.
17. Use of the spherical cavity-like macroporous alumina in any one of items 1-5 in a heavy oil hydrogenation process.

### Example

The present application is further described below in conjunction with examples, but the present application is not limited thereby.

In the following examples and comparative examples:
In the SEM image of the obtained porous material, 50 cross-sections of the internal cavities are randomly selected, their diameters are measured and the average value is calculated as the average diameter of the cavity; the thicknesses between 50 groups of adjacent cavity cross-sections at the thinnest part of the cavity wall are randomly measured, and the average value is taken as the cavity wall thickness of the cavity; and the diameters of 50 grains on the cavity wall are randomly measured, and the average value is taken as the average diameter of the grains.

The specific surface area and pore volume of the obtained porous material were measured by BET method, and the porosity was measured by mercury intrusion method. The mesopore diameter of the porous material is measured by the BET nitrogen adsorption method and calculated by the BJH method. The mesopore distribution profile of the porous material is obtained by the BJH method, wherein dV/dD is used as the ordinate and the pore diameter is used as the abscissa. The half-height width of the pore distribution peak is the pore diameter range at half the height of the pore distribution peak.

The crushing strength of the porous material is tested according to HG T 2782-2011, and the bulk density is tested according to GB/T 23771-2009.

### Example 1

At room temperature (25 °C), water, anhydrous ethanol, aluminum chloride, glycerol, formamide, polyethylene glycol (viscosity-average molecular weight, 100,000), and sucrose were mixed uniformly, and then ethylene oxide was added. The contents of each components of the mixture by weight were: 15% of water, 15% of ethanol, 20% of aluminum chloride, 1% of glycerol, 1% of formamide, 22% of sucrose, 1% of polyethylene glycol, and 25% of ethylene oxide. After being uniformly mixed, the obtained gel was aged at 30 °C for 48 hours, and then the aged mixture was soaked in ethanol for 48 hours. After the soaking was completed and the liquid phase was removed, it was dried at 60 °C until the product no longer had obvious weight loss. Subsequently, the resultant was calcined at 550 °C for 3 hours and then cooled to room temperature to obtain the alumina porous material of the present application.

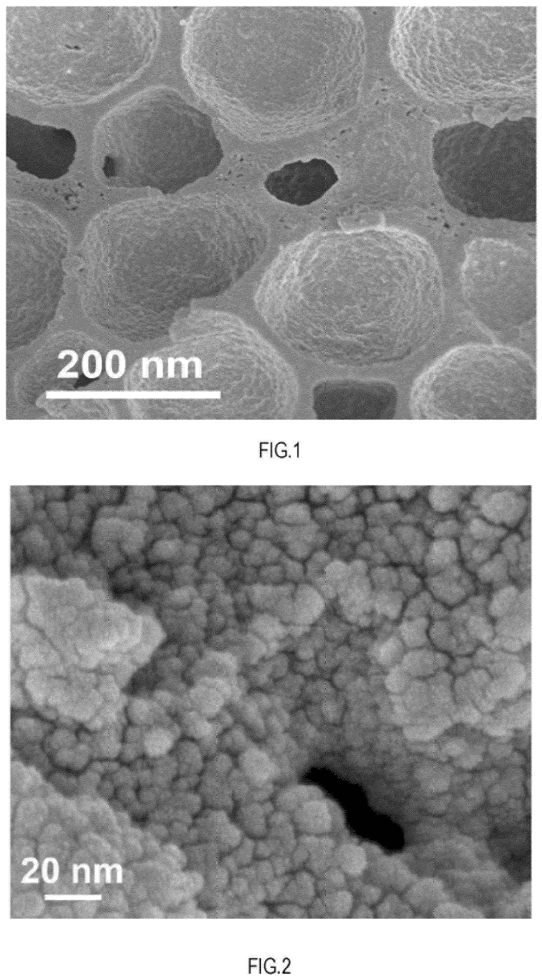

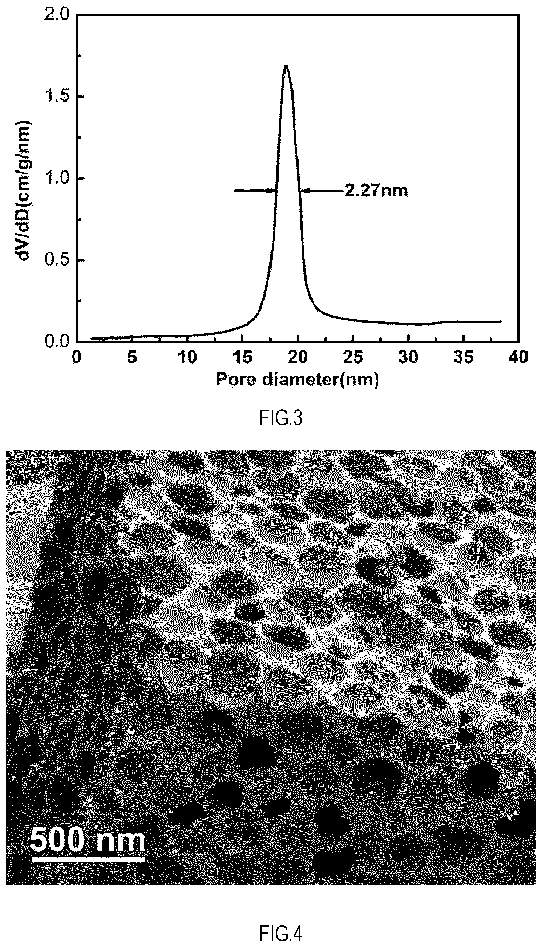

The SEM image of the porous material is shown in Fig. 1, and the SEM image of the grains on the cavity wall is shown in Fig. 2, wherein the average diameter of the internal cavity of the porous material is 175 nm, the average thickness of the cavity wall is 21 nm, the average diameter of the grains on the cavity wall is 6 nm, and the shape of the cavity is quasi-spherical and is substantially arranged in a face-centered cubic form. The porous material has a specific surface area of 315 m²/g, a pore volume of 0.86 m³/g, a porosity of 0.82, a pore diameter corresponding to the peak value of the mesopore distribution peak of 19 nm, a half-height width of the mesopore distribution peak of 2.27 nm (as shown in FIG.3), and a crushing strength of 1.68 N/mm.

### Example 2

At room temperature (25 °C), water, anhydrous ethanol, aluminum chloride, propylene glycol, acetamide, polyethylene glycol (viscosity-average molecular weight, 200,000), and fructose were mixed uniformly, and then propylene oxide was added. The contents of each components of the mixture by weight were: 30% of water, 30% of ethanol, 14% of aluminum chloride, 1% of propylene glycol, 1.5% of acetamide, 10% of fructose, 1% of polyethylene glycol, and 12.5% of propylene oxide. After being uniformly mixed, the obtained gel was aged at 40 °C for 48 hours, and then the aged mixture was soaked in ethanol for 48 hours. After the soaking was completed and the liquid phase was removed, it was dried at 45 °C until the product no longer had obvious weight loss. Subsequently, the resultant was calcined at 650 °C for 3 hours and then cooled to room temperature to obtain the alumina porous material of the present application.

The SEM image of the obtained porous material is shown in FIG. 4. The average diameter of the internal cavity of the porous material is 280 nm, the average thickness of the cavity wall is 52 nm, the average diameter of the grains of the cavity wall is 19 nm, and the shape of the cavity is quasi-spherical and is substantially arranged in a face-centered cubic form. The porous material has a specific surface area of 275 m²/g, a pore volume of 0.75 m³/g, a porosity of 0.84, a pore diameter corresponding to the peak value of the mesopore distribution peak of 16 nm, a half-height width of the mesopore distribution peak of 1.7 nm, and a crushing strength of 15.7 N/mm.

### Example 3

At 40 °C, water, anhydrous ethanol, aluminum chloride, butanediol, N,N-dimethylformamide, polyethylene glycol (viscosity-average molecular weight, 50,000) and glucose were mixed uniformly, and then a mixture of pyridine and propylene oxide was added. The contents of each components of the obtained mixture by weight were: 18% of water, 19% of ethanol, 23% of aluminum chloride, 2% of butanediol, 1% of N,N -dimethylformamide, 2% of polyethylene glycol, 20% of glucose, and 15% of mixture of pyridine and propylene oxide (mass ratio, 1:1). After being uniformly mixed, the obtained gel product was aged at 20 °C for 72 hours, and then the aged mixture was soaked in ethanol for 24 hours. After the soaking was completed and the liquid phase was removed, it was dried at 60 °C until the product no longer had obvious weight loss. The resultant was then calcined at 750 °C for 3 hours and then cooled to room temperature to obtain the alumina porous material of the present application.

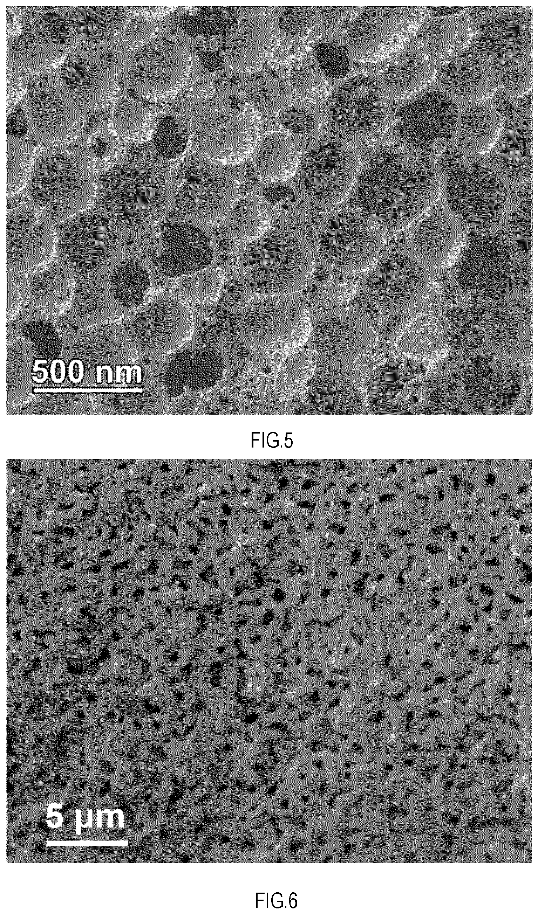

The SEM image of the obtained porous material is shown in Fig. 5. The average diameter of the internal cavity of the porous material is 2.10 nm, the average thickness of the cavity wall is 1.8 nm, the average diameter of the grains of the cavity wall is 27 nm, and the shape of the cavity is quasi-spherical and is substantially arranged in a face-centered cubic form. The specific surface area of the porous material is 212 m²/g, the pore volume is 0.76 m³/g, the porosity is 0.68, the pore diameter corresponding to the peak value of the mesopore distribution peak is 21 nm, the half-height width of the mesopore distribution peak is 2.1 nm, and the crushing strength is 16.5 N/mm.

### Example 4

At 40 °C, water, anhydrous ethanol, aluminum chloride, butanediol, N,N-dimethylformamide, polyvinyl alcohol (viscosity average molecular weight, 100,000), and sodium chloride were mixed uniformly, and then butylene oxide was added. The contents of each components of the mixture by weight were: 18% of water, 19% of ethanol, 23% of aluminum chloride, 2% of butanediol, 1% of N,N-dimethylformamide, 2% of polyvinyl alcohol, 20% of sodium chloride, and 15% of butylene oxide. After being uniformly mixed, the obtained gel product was aged at 20 °C for 48 hours, and then the aged mixture was soaked in ethanol for 24 hours. After the soaking was completed and the liquid phase was removed, it was dried at 50 °C until the product no longer had obvious weight loss. The resultant was then calcined at 750 °C for 3 hours and then cooled to room temperature to obtain the alumina porous material of the present application.

The average diameter of the internal cavity of the obtained porous material is 185 nm, the average thickness of the cavity wall is 26 nm, the average diameter of the grains of the cavity wall is 24 nm, and the shape of the cavity is quasi-spherical and is substantially arranged in a face-centered cubic form. The porous material has a specific surface area of 235 m²/g, a pore volume of 0.76 m³/g, a porosity of 0.71, a pore diameter corresponding to the peak value of the mesopore distribution peak of 20 nm, a half-height width of the mesopore distribution peak of 1.7 nm, and a crushing strength of 17.5 N/mm.

### Example 5

Same as Example 1, except that 5% of cerium chloride was added, and the amounts of water and anhydrous ethanol used were reduced by 2.5% respectively, while the other contents remained unchanged. The properties of the obtained material are close to those of Example 1, indicating that the cerium element modification will not have a significant adverse effect on the above-mentioned physicochemical properties of the alumina porous material of the present application, while other test results show that the high-temperature stability of the cerium-modified alumina is improved. In addition, if the calcination conditions of Example 1 and this example were changed, the calcination temperature to 850 °C and the calcination time to 6 hours, the product of the former obviously undergone crystal transformation, almost completely transforming from the γ phase to the δ phase, while the product of the latter only partially transformed into the δ phase.

### Example 6

Same as Example 1, except that 5% of ethyl orthosilicate was added, and the amounts of water and anhydrous ethanol used were reduced by 2.5% respectively, while the other contents remained unchanged. The properties of the obtained material are close to those of Example 1, indicating that the silicon element modification will not have a significant adverse effect on the above-mentioned physicochemical properties of the alumina porous material of the present application, while other test results show that the material obtained after silicon modification will produce some B acid, while the product obtained in Example 1 only contains L acid.

### Comparative Example 1

An alumina porous material was prepared according to Example 1, except that the sucrose content was reduced to 1.5%. The SEM image of the obtained alumina material is shown in FIG. 6, which shows that randomly distributed worm-like pores are formed, and the substantially orderly distributed internal cavities described in the present application are not formed.

### Comparative Example 2

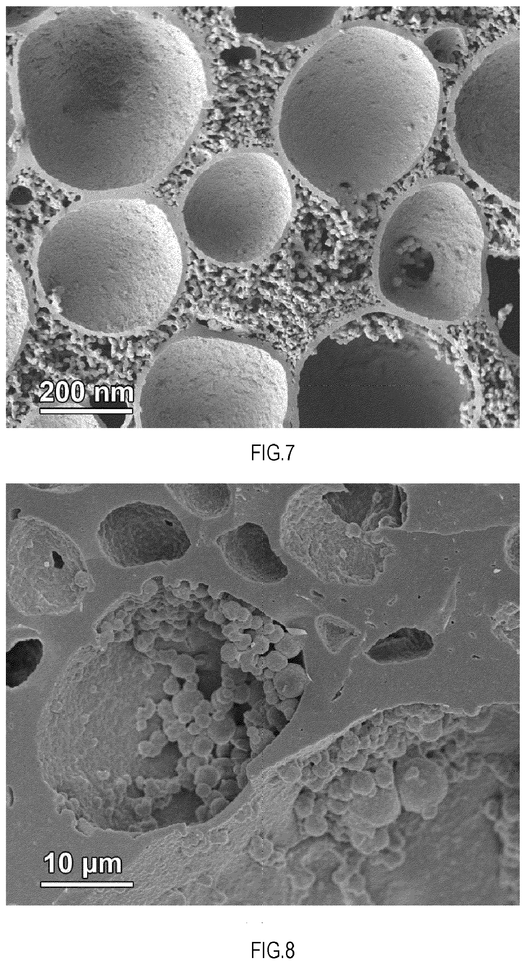

An alumina porous material was prepared according to Example 1, except that glycerol was not added. The SEM image of the obtained alumina material is shown in FIG. 7, and the average diameter of the internal cavity thereof is more than 1 µm, and the uniformity thereof becomes poor.

### Comparative Example 3

An alumina porous material was prepared according to Example 1, except that formamide and glycerol were not added. The SEM image of the obtained alumina material is shown in FIG. 8, and the internal cavities thereof are nonuniformly distributed and cannot form the substantially ordered distribution described in the present application. The average diameter of the cavities is too large, generally more than 5 µm, and the uniformity is very poor.

### Comparative Example 4

An alumina porous material was prepared according to Example 1, except that the gel product was not subjected to the elution treatment but directly dried and calcined. Under this condition, since sucrose is not eluted but retained in the sample, it burns during calcination, forming thick smoke that pollutes the environment. In addition, the gas produced by the burning of sugars destroys the cavity structure, and the uniformity of the cavity size and the orderliness of the arrangement are destroyed.

### Comparative Example 5

A three-dimensional orderly macroporous alumina was prepared according to the method described in Section 2 of Micropor. Mesopor. Mater (2012, 158:1-6). After calcination at 550 °C for 3 hours, the resulting material has a crushing strength of 2.3 N/mm, which was too fragile and easily pulverized when used in a high-pressure environment. In addition, the half-height width of its mesopore distribution is 26nm, and the pore distribution is relatively wide.

### Application Example 1

The alumina porous material prepared in Example 1 was used as a support, and was impregnated with an equal volume of a metal salt composite solution formed by ammonium molybdate, basic nickel carbonate and phosphoric acid, dried at 120 °C for 5 hours, and calcined at 500 °C for 3 hours to obtain an oxidized Ni-Mo/Al₂O₃ hydrogenation catalyst, the composition of which is shown in Table 1 (wherein P is calculated as P₂O₅, and the mass content is 1.2%).

### Test Example 1

The effect of using the hydrogenation catalyst obtained in Example 1 for residue hydrodemetallization reaction was tested and compared with a reference catalyst. The reference catalyst is the commercially available hydrodemetallization catalyst FZC-204.

Catalyst performance evaluation: Maoming mixed residue (the main properties of the raw residue are: residual carbon content of 11.2%, (Ni+V) content of 93 µg/g, sulfur content of 2.89%) as raw material, the catalyst performance was evaluated in a 200mL fixed bed reactor. The operating conditions are as follows: after the catalyst is sulfurized, the material reaction temperature is 380 °C, the hydrogen partial pressure is 15 MPa, and the space velocity is 0.4 h⁻¹. After the test device has operated for 300 hours and the catalyst activity is stable, the oil sample is taken and the content of Ni and V impurities is tested. The test results are shown in Table 1.

**Table 1. Evaluation results of the residue hydrogenation catalytic performance of the catalyst of Application Example 1 and the reference catalyst**

| | Active metal content, wt% | | Demetallization rate, % | | | Desulfurization rate, % | Residual carbon removal rate, % |
|---|---|---|---|---|---|---|---|
| | MoO₃ | NiO | Ni+V | Ni | V | | |
| Catalyst of Application Example 1 | 11.5 | 2.8 | 65.1 | 53.6 | 68.3 | 51.5 | 34.5 |
| Reference catalyst | 11.6 | 2.9 | 58.6 | 47.7 | 60.5 | 43.2 | 25.9 |

The results in Table 1 show that the overall catalytic performance of the hydrogenation catalyst of Application Example 1 based on the alumina porous material of the present application in terms of demetallization, desulfurization and residual carbon removal is better than that of the reference catalyst.

The preferred embodiments of the present application are described in detail above; however, the present application is not limited to the specific details in the above embodiments. Within the technical concept of the present application, a variety of simple modifications can be made to the technical solution of the present application, and these simple modifications all fall within the protection scope of the present application.

It should also be noted that the various specific technical features described in the above specific embodiments can be combined in any suitable manner without contradiction. In order to avoid unnecessary repetition, this application will not further describe various possible combinations.

In addition, the various embodiments of the present application may be arbitrarily combined, and as long as they do not depart from the concept of the present application, they should also be regarded as the content falling within the present application.

## Claims

1. An alumina porous material comprising substantially orderly distributed spherical or quasi-spherical cavities inside, the cavities have an average diameter of 100-500 nm, preferably 150-350 nm, and at least a part of the adjacent cavities are connected through mesopores.

2. The porous material according to claim 1, wherein the mesopores are measured by BET (Brunauer, Emmett, Teller) nitrogen adsorption method and calculated by BJH method, and the pore diameter corresponding to the peak value of the mesopore distribution peak on the pore distribution profile of the porous material is in the range of 10-30 nm.

3. The porous material according to any one of the preceding claims, wherein the cavities are distributed inside the porous material substantially in a form selected from face-centered cubic, body-centered cubic, close-packed hexagonal or a combination thereof.

4. The porous material according to any one of the preceding claims, wherein the mesopores are measured by BET nitrogen adsorption method and calculated by BJH method, and the half-height width of the mesopore distribution peak on the pore distribution profile of the porous material is no more than 15 nm, preferably 1-10 nm, and more preferably 1-6 nm.

5. The porous material according to any one of the preceding claims, wherein the average thickness of the cavity walls between adjacent cavities is 5-100 nm, preferably 10-80 nm, more preferably 10-35 nm.

6. The porous material according to any one of the preceding claims, wherein the cavity walls are composed of alumina grains with an average diameter of 5-30 nm, or the cavity walls are composed of alumina precursor grains containing water or hydroxyl groups and organics.

7. The porous material according to any one of the preceding claims, wherein the porous material has one or more of the following characteristics:
a crushing strength of 8-20 N/mm, preferably 10-18 N/mm;
a specific surface area of 200-350 m²/g, preferably 210-320 m²/g, as measured by the BET method;
a pore volume of 0.5-1.5 m³/g, preferably 0.7-1.0 m³/g, as measured by BET method;
a porosity of 0.50-0.95, preferably 0.6-0.9, as measured by mercury intrusion method; and
a bulk density of 0.1-1.0 g/cm³, preferably 0.2-0.5 g/cm³.

8. A sol-gel method for preparing porous alumina material, comprising the following steps:
1) mixing an aluminum source, a cavity forming agent, a polyol, an amide, a polyhydroxy polymer, a solvent and optional an additive, then adding a coagulant, and mixing to obtain a gel;
2) subjecting the gel obtained in step 1) to an aging treatment to obtain an aged material;
3) eluting the aged material obtained in step 2) with an eluting agent to obtain an eluate and a solid phase material; and
4) drying and optionally calcining the solid phase material obtained in step 3) to obtain the porous material,
wherein the cavity forming agent is selected from soluble sugar, soluble alkali metal salt or a combination thereof, preferably, the soluble sugar is selected from sucrose, glucose, fructose, maltose or a combination thereof, the soluble alkali metal salt is selected from nitrate, sulfate or chloride of alkali metal, more preferably, the alkali metal is selected from potassium, sodium or a combination thereof; and
the cavity forming agent is used in an amount of 10-60 g, preferably 20-60 g, and more preferably 30-60 g relative to the amount of 100 g of solvent;
the solvent is preferably selected from a low-carbon alcohol, water, or a combination thereof;
the coagulant is preferably selected from substituted or unsubstituted pyridine, alkylene oxide or a combination thereof, wherein the substituted pyridine is preferably selected from alkyl pyridine, pyridine chloride or a combination thereof, the alkyl pyridine is further preferably selected from monomethyl pyridine, dimethyl pyridine, trimethyl pyridine or a combination thereof, and the pyridine chloride is further preferably selected from monochloropyridine, dichloropyridine, trichloropyridine or a combination thereof;
the eluting agent is preferably selected from a low-carbon alcohol, water, or a combination thereof.

9. The method according to claim 8, having one or more of the following features:
the aluminum source is selected from aluminum chloride, aluminum nitrate, aluminum sulfate or a combination thereof;
the low-carbon alcohol is selected from alcohols of C₅ or below, preferably selected from methanol, ethanol, n-propanol, isopropanol, or a combination thereof;
the polyhydroxy polymer is selected from polyethylene glycol, polyvinyl alcohol or a combination thereof, and has a viscosity average molecular weight of 50,000 to 200,000;
the polyol is selected from ethylene glycol, propylene glycol, butylene glycol, glycerol, isopropanol, pentaerythritol, or a combination thereof;
the amide is selected from formamide, acetamide, dimethylformamide, diethylformamide, or a combination thereof.

10. The method according to claim 8 or 9, wherein based on the weight of the gel obtained in step 1), the gel comprises 10-35 wt%, preferably 15-30 wt% of the aluminum source, 10-40 wt%, preferably 15-30 wt% of the cavity forming agent, 0.1-2.5 wt%, preferably 0.5-1.5 wt% of the polyol, 0.1-2.5 wt%, preferably 0.2-2.0 wt% of the amide, 0.1-2.5 wt%, preferably 0.2-2.0 wt% of the polyhydroxy polymer, 20-70 wt%, preferably 25-60 wt% of the solvent, 15-35 wt%, preferably 20-30 wt% of the coagulant, and 0-20 wt%, preferably 0-15 wt% of the additive.

11. The method according to any one of claims 8 to 10, wherein the additive is selected from water-soluble or water-dispersible precursors of Ce, Zr, Ti, La, Si and P, preferably selected from soluble salts of Ce, Zr, Ti and La, such as nitrates, sulfates and chlorides of these metals, or preferably selected from alkoxides, silicates and phosphoric acids of Zr and Ti.

12. The method according to any one of claims 8 to 11, wherein the aging treatment conditions in step 2) include: aging temperature of 10-90 °C, preferably 20-60 °C; and aging time of 1-72 hours, preferably 12-60 hours.

13. The method according to any one of claims 8 to 12, wherein the elution in step 3) is performed by: soaking the aged material in an eluting agent at 10-100 °C for 1-72 hours, preferably 24-48 hours, and then performing solid-liquid separation;
the solid-liquid separation is preferably performed by a method selected from filtration, centrifugal separation, gravity sedimentation, or a combination thereof.

14. The method according to any one of claims 8 to 13, wherein the drying conditions in step 4) include: a temperature of 10-150 °C, preferably 30-90 °C, and a time of 0.5-48 hours; and
the calcination conditions in step 4) include: a temperature of 300-950 °C, preferably 450-850 °C, more preferably 550-750 °C, and a time of 0.5-48 hours, preferably 2-24 hours, more preferably 1-6 hours.

15. A porous alumina material prepared by the method according to any one of claims 8 to 14.

16. A method for using the porous alumina material according to any one of claims 1 to 7 or 15 as a catalyst support, comprising the step of loading a catalytically active component on the porous material,
preferably, the catalyst is a heavy oil hydrogenation catalyst, and the catalytically active component is a hydrogenation catalytically active component, preferably selected from Co, Mo, Ni, W or a combination thereof.

17. A heavy oil hydrogenation catalyst comprising, based on the dry weight of the catalyst, 40-90% of a support and 10-50% of a hydrogenation catalytically active component, wherein the support is the porous alumina material according to any one of claims 1 to 7 or 15, and preferably, the hydrogenation catalytically active component is selected from Co, Mo, Ni, W or a combination thereof.
